# EUROPEAN PATENT APPLICATION

(11) **EP 3 751 782 A1**
(43) Date of publication of application: **16.12.2020**
(21) Application number: 19180141.4
(22) Date of filing: 14.06.2019
(51) Int. Cl.: H04L 9/08, H04L 9/32

(54) **METHOD FOR ESTABLISHING A SECURE DATA COMMUNICATION FOR A PROCESSING DEVICE AND A TRUST MODULE FOR GENERATING A CRYPTOGRAPHIC KEY**

(71) Applicant: Siemens Aktiengesellschaft, 80333 München (DE)
(72) Inventor: Falk, Rainer, 85586 Poing (DE)

(57) **Abstract**

A method for establishing a secure data communication based on a cryptographic key is proposed, wherein the method comprising:
submitting a cryptographic key request to a trust module;
verifying a digital signature based on a public key assigned to the processing device;
generating an internal cryptographic key based on the public key assigned to the processing device and a secret key assigned to the trust module;
generating the cryptographic key based on the internal cryptographic key and a key identifier of the processing device;
encrypting the cryptographic key using the public key assigned to the processing device; and
transmitting the encrypted cryptographic key to the processing device;
wherein the trust module is implemented as a stateless Lambda trust anchor.

## Description

This disclosure relates to a method and a computer program product for establishing a secure data communication for a processing device. Further, a trust module for generating a cryptographic key and a field device are disclosed.

Secure elements (or trust modules) are used for secured storing of cryptographic keys and for executing cryptographic operations in a secured execution environment. Conventionally, a trust module may be implemented as a separated hardware component such as a crypto controller or a hardware security module or may be integrated on a field programmable gate array (FPGA) or within a separated execution environment such as a Trusted Execution Environment (TEE) .

The main requirement of the above-described types of trust modules is to protect or to secure the access to the trust module in order to avoid that, for example, an unauthorized application of a processing device (or an entity) can obtain cryptographic keys or is able to manipulate the trust module.

If the user or the processing device wants to get access to the trust module, the processing device has to perform an access authentication. Traditionally, the access authentication is executed, e.g. by means of a password, a PIN, a biometric ID, etc. In case of a successful access authentication, the trust module authenticates the processing device and allows access to the cryptographic keys and operations of the trust module.

However, the above-described types of access authentication require an explicit implementation of the of the access authentication function and a configuration of the respective secure element.

It is one object of the present invention to provide means for simplifying an access authentication to a trust module.

According to a first aspect, a method for establishing a secure data communication for a processing device based on a cryptographic key is proposed. The method comprising the steps:
submitting a cryptographic key request to a trust module, the cryptographic key request including a key identifier provided by the processing device, wherein the key request is protected by a digital signature of the processing device;
at the trust module, verifying the digital signature based on a public key assigned to the processing device;
at the trust module, generating an internal cryptographic key based on the public key assigned to the processing device and a secret key assigned to the trust module;
at the trust module, generating the cryptographic key based on the internal cryptographic key and the key identifier provided by the processing device;
at the trust module, encrypting the cryptographic key using the public key assigned to the processing device; and
transmitting the encrypted cryptographic key to the processing device;
wherein the trust module is implemented as a stateless Lambda trust anchor.

With the above-described method, in particular by using the stateless Lambda trust anchor, it is possible that any processing device or entity can get access to the trust module and can receive from the trust module, for example, a requested cryptographic key which is unique for the single processing device or entity. By using the requested cryptographic key, the processing device or entity is able to establish a secure data communication between the processing device or entity and another device or entity.

This is possible because the employed trust module is a "stateless" device or module. One can speak of a stateless a Lambda trust anchor or an implemented Lambda trust anchor function.

The key identifier allows the processing device to request multiple keys for different purposes. The key identifier can encode the purpose as intended by the processing device. However, a processing device can use arbitrary key identifiers that do not have to be known in advance by the trust module.

Preferably, the processing device can decrypt the encrypted cryptographic key using its secret key or private key. The decrypted key may be used, e.g., to authenticate the processing device or to decrypt encrypted configuration data.

Advantageously, it is possible to flexibly activate the trust module function in an embedded system or an edge device in cloud computing environment. The trust anchor is in particular realized as an instance within the trust module on demand, for example in a cloud backend, only if an access to the trust module or in particular a cryptographic key is needed. Further, the trust module is not device-specific or Application-specific, and it is not personalized. Thus, by implementing the trust module, a depersonalized, universal hardware-based key storage and generation in devices can be implemented. Therefore, the trust module can be subsequently integrated in existing devices. This increases the usability and the availability of the trust module.

Further any arbitrary processing device or entity can get access to the trust module or can use the trust module because as a stateless trust module, no specific access authentication configuration for a processing device or entity which wants to get access to the trust module or a configuration of keys and key identifiers is required. Advantageously, this increases the flexibility of the trust module while the access authentication configuration effort is decreased or removed.

The trust module can be implemented as a hardware application such as a partial bitstream for a partial reconfiguration of a field programmable gate array (FPGA). Then, the trust anchor is retrofittable and updateable.

If multiple processing devices or entities request access to the trust module, for each processing device or entity, a different internal cryptographic key and thus a different cryptographic key is generated and processed by the trust module. Thus, for example, a first processing device which got a first cryptographic key cannot use a second cryptographic key of a second processing device because the second cryptographic key is only assigned to the second processing device due to the public key of the second processing device. Therefore, the data security is improved.

Also, as long as the processing devices or entities securely store their own private (secret) keys, no attacker can obtain and decrypt the cryptographic key which is generated by the trust module. This increases the data security as well.

The trust module is implemented as a stateless trust module or a stateless lambda trust anchor or a stateless lambda trust anchor function. Further, in particular, the trust module is implemented to perform several cryptographic operations. Cryptographic operations may comprise encrypting, decrypting, signature calculation, signature verification, Message authentication code (MAC) calculation, MAC verification, key generation, loading of a key. If the trust module is implemented as a separate hardware component, and a processing device or entity can get access to a physical interface of the trust module. If the trust module is integrated on the FPGA or within a separate execution environment, the processing device or entity may get access to an internal software interface of the trust module. Preferably, the trust module does not contain information about a specific processing device, application or entity that is allowed to get access to the trust module or allowed to get a key.

A processing device may be a central processing unit (CPU), a processor or a processing unit configured to perform computational operations such as calculating values or executing programs or applications. In particular, the processing device comprises at least an application and an operating system. The operating system may be implemented as an operating software. The application or application software may comprise computer programs that are used to process or implement a useful or desired non-operating-system functionality. The processing device can be a caller who wants to get access to the trust module. A processing unit or an entity may comprise a plurality of applications. Preferably, the trust module as a programmable hardware unit such as a field programmable gate array (FPGA) may be used by a plurality of applications.

In particular, the application generates the cryptographic key request which is then submitted to the trust module. Preferably, the cryptographic key request is a request for obtaining a derived cryptographic key from the trust module based on the identifier or key identifier. Preferably, the key identifier provided by the processing device is a key derivation parameter which is specific for the intended purpose of the requested key, e.g. for device authentication or for decryption of configuration data.. Specifically, the key identifier and the digital signature are submitted from the processing device to the trust module. Preferably, the key identifier is a key purpose identifier or a key category identifier. Specifically, the key identifier may be a derivation parameter, e.g., a sequence of bits or a text string that designates the purpose of the requested key. For example, the key identifier could be "configData" or "deviceAuthentication".

Preferably, an entity is a processing unit, an application, a software application, a container, a container on a field device which has the ability for executing applications, an Internet-of-Things-gateway (IoT gateway), an IoT-backend, a client, a server or a user which wants to get access to the trust module by using a processing device.

In the verifying step, the format of the digital signature, in particular the cryptographic part of the digital signature, is verified as to whether the digital signature comprises correct cryptographic parameters. Specifically, the digital signature comprises correct cryptographic parameters if the digital signature is verifiable with the public key assigned to a processing device. The private key or secret key may be provided to the trust module as part of the key request. For example, it may be part of the digital signature structure. In another variant, the private key may be provided as part of the setup of the communication channel between the processing device and the trust module.

Generating an internal cryptographic key is at least based on the public key of the processing device. Generating the internal cryptographic key is at least based on the public key used to verify the digital signature of the caller.

Preferably, the internal cryptographic key is a symmetrical cryptographic key.

Specifically, at the trust module, the internal cryptographic key is generated based on additional parameters. In particular, the internal cryptographic key can be generated based on a device identifier of the trust module.

In particular, the secret key assigned to the trust module is a symmetrical cryptographic key.

Specifically, the generated cryptographic key is formed as a symmetrical cryptographic key. The cryptographic key may be further used for encrypting, decrypting, digital signing or other cryptographic operations which can be performed by the processing device or the entity to which the cryptographic key is assigned.

Preferably, the encrypted cryptographic key may comprise a cryptographic checksum (authenticated encryption).

According to an embodiment, the method further comprises ate least one of the steps:
at the processing device, decrypting the encrypted cryptographic key using a secret key assigned to the processing device; and
establishing a secure data communication between the processing device and another device using the cryptographic key.

Preferably, the trust module provides to the processing device at least the cryptographic key. The processing device uses this cryptographic key to establish a secured data communication between the processing device and another device. Thus, by using the obtained generated cryptographic key, advantageously, a reliably and secured data transmission between the processing device and any other device for transmitting data is implemented.

In particular, the secure data communication is implemented as a protected data communication or a protected data communication channel, wherein the protection is achieved by using the cryptographic key.

Specifically, another device is a field device implemented in an automation system environment, such as a programmable logic controller, an IoT device, an edge device or an edge cloud device. The other device may be also a fixed or removable configuration module storing configuration data.

According to a further embodiment, the public key assigned to the processing device is submitted to the trust module as a part of the digital signature or as a raw key or by referencing the public key.

Advantageously, by submitting the public key as a part of the digital signature, the data security is increased because the digital signature may comprise unique identification information assigned to the owner of the public key and thus a more reliably assignment to the owner of the public key is implemented.

Preferably, a raw key is a public key according to an X.509 certificate, without other data or information which is implemented in the X.509 certificate.

According to a further embodiment, the method further comprises:
generating the internal cryptographic key using a first key derivation function, wherein the first key derivation function maps the public key assigned to the processing device and the secret key assigned to the trust module to the internal cryptographic key.

Preferably, the first key derivation function is used in conjunction with non-secret parameters such as the public key assigned to the processing device to derive at least one key from a secret key assigned to the trust module. Advantageously, using a key derivation function (first or second key derivation function) can prevent that an attacker, which receives the derived key such as the cryptographic key, obtains useful information about the original keys which are used as an input for the key derivation function. This increases the security of the cryptographical system. Further, specifically, compared to a digital signature, a key derivation function has a decreased computing time and requires shorter cryptographic keys.

Specifically, the generated internal cryptographic key is a symmetrical cryptographic key.

In particular, a key derivation function such as the first key derivation or second key derivation function is a cryptographic operation which generates, by using at least one cryptographic key, one or a plurality of cryptographic keys.

Preferably, the first key derivation function as well as the second key derivation function is implemented as a symmetrical key derivation function. For example, symmetrical key derivation functions comprise a key derivation function (KDF), HKDF and HMAC-SHA256 (HMAC-Secure Hash Algorithm 2). In particular, HKDF is a simple KDF based on a hash-based message authentication code (HMAC).

According to a further embodiment, the method further comprises:
generating, the internal cryptographic key using a key generation function at which a public-private key pair is generated based on a primary seed.

Advantageously, by using a primary seed, in particular by using a key generation function which uses for key generation a primary seed, it is possible to generate the internal cryptographic key "on the fly". In particular, "on the fly" means that the internal cryptographic key is generated at the request and is stored in a volatile storage unit. This has the advantage that the generated internal cryptographic key requires no persistent memory space or storage space and may be deleted after the processing of the request is finished.

In this embodiment, in contrast to a key derivation function, a key generation function is used. In particular, a public-private key pair comprises of a public key and a private key or secret key, wherein the public key may be used for encrypting and the private key may be used for decrypting.

A primary seed or a primary seed value or a seed value is used as a parameter for generating the public-private key pair. Specifically, if the trust module is a trusted platform module (TPM), the TPM is configured to generate, by using a primary seed value, an asymmetrical public-private key pair for different cryptographic algorithms such as Rivest Shamir and Adleman (RSA), Digital signature algorithm (DSA) or Elliptic curve digital signature algorithm (ECDSA).

Preferably, if a single processing device executes a plurality of cryptographic key requests, at every cryptographic key request the same internal cryptographic key is generated because the key generation function is a deterministic function.

According to a further embodiment, the method further comprises:
generating the cryptographic key using a second key derivation function, wherein the second key derivation function maps the internal cryptographic key and the key identifier of the processing device to the cryptographic key.

Preferably, the cryptographic key is formed as a symmetrical cryptographic key which is derived or generated using the second derivation function.

Further, the advantages of the first key derivation function also applies to the second derivation function.

According to a further embodiment, the method further comprises:
decrypting, employing the secret key which is assigned to the trust module, a data structure which is transmitted as a part of the cryptographic key request from the processing device to the trust module in order to obtain a decrypted key out of the data structure, wherein the decrypted key is used for a cryptographic operation of the trust module.

Preferably, the data structure comprises at least a "Black Key Blob". In particular, the trust module uses its private key or secret key to decrypt the transmitted "Black Key Blob". As a result of the decrypted "Black Key Blob", a decrypted key, which is contained in the "Black Key Blob", is used for cryptographic operations of the trust module. Specifically, a cryptographic operation is an operation which is executed whole or as parts from the trust module and comprises encrypting, decrypting, signature calculation or signature verification.

Advantageously, the "Black Key Blob" can be stored external to the trust module, for example in a flash memory of the processing unit. Further, at a request to the trust module from the processing device, the "Black Key Blob" can be provided to the trust module.

According to a further embodiment, the method further comprises:
submitting, the cryptographic key request from the processing device to the trust module via an authenticated communication channel.

Advantageously, by submitting the cryptographic key request from the processing device to the trust module via an authenticated communication channel, the data security is increased.

Preferably, the authenticated communication channel is formed by using a Transport layer security (TLS) protocol, an Internet protocol security (IPsec) or an Internet key exchange (IKEv2) protocol.

According to a further embodiment, the method further comprises:
storing, the generated internal cryptographic key, in a volatile storage unit.

Advantageously, the internal cryptographic key is generated "on the fly". In particular, "on the fly" means that the internal cryptographic key is generated at the request and is stored in a volatile storage unit. This has the advantage that the generated internal cryptographic key requires no persistent memory space or storage space and may be deleted after the processing of the request is finished. Thus, in this embodiment, no generated internal cryptographic key is persistently stored. Thus, the trust module can be implemented in existing devices because no non-volatile storage unit for storing generated cryptographic keys is required.

Preferably, a volatile storage unit is a storage unit which stores its data as long as the storage unit is supplied with power or supply voltage. In particular, examples for a volatile storage unit are Random access memories (RAM), Dynamic random access memories (DRAM) or Static random access memories (SRAM).

According to a further embodiment, the method further comprises:
storing, the generated internal cryptographic key, in a non-volatile storage unit.

In order to not generate the internal cryptographic key at every cryptographic key request again, it is possible to store the generated internal cryptographic key in a non-volatile storage unit. This increases the efficiency of the above-described method.

Preferably, a non-volatile storage unit is a storage unit which stores its data also even if the non-volatile storage unit is no longer supplied with power or supply voltage. Therefore, a non-volatile storage unit is a storage unit which persistently stores its data. In particular, examples for a non-volatile storage unit are Read only memories (ROM), Flash-storage units or hard disks.

According to a further embodiment, the trust module is formed as a crypto controller, a hardware security module implemented on a security chip, within a separated execution environment as a Trusted Execution Environment (TEE) or an Intel Software Guard Extension (SGX).

Preferably, a security chip is a trusted platform module.

According to a second aspect, a computer program product is proposed which comprises program code for executing the above-described method according to the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a trust module for generating a cryptographic key for establishing a secure data communication with a processing device is proposed. The trust module comprises:
an input unit configured to receive a cryptographic key request from the processing device, wherein the cryptographic key request includes a key identifier provided by the processing device, and wherein the key request is protected by a digital signature of the processing device;
a verification unit configured to verify the digital signature based on a public key assigned to the processing device;
a first key generation unit configured to generate an internal cryptographic key based on the public key assigned to the processing device and a secret key assigned to the trust module;
a second key generation unit configured to generate the cryptographic key based on the internal cryptographic key and the key identifier provided by the processing device;
an encryption unit configured to encrypt the cryptographic key using the public key assigned to the processing device; and
an output unit configured to transmit the encrypted cryptographic key to the processing device;
wherein the trust module is implemented as a stateless Lambda trust anchor.

The respective unit, e.g. the processing unit, may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

According to a further embodiment of the trust module, the trust module further comprises:
a control device or unit implemented to operate the trust module according to the above-described method according to the method for establishing the secure data communication as described above or below with respect to the embodiments.

According to a further embodiment of the trust module, the trust module is implemented in a cloud backend of a Function-as-a-service-Cloud-Infrastructure (FaaS-infrastructure) and is configured to generate a client-specific key in dependence of a requesting client.

Preferably, the trust module in a FaaS-infrastructure is used by other entities which are implemented within the cloud backend. In particular, other entities comprise clients, container or applications.

Further, for a secured encrypting of data which is assigned to the client, a client-specific key may be generated by the trust module in dependence of the private key or secret key of the client. Preferably, the client-specific key is generated in the cloud backend by the trust module "on the fly" and is stored in a volatile storage unit. This has the advantage that no configuration of the client and the trust module for generating the client-specific key is required. This decreases the access authentication configuration effort. Specifically, the client-specific key is used for a secured storage of the data of the client in a cloud (data at rest) .

In particular, the trust module which is used in the cloud backend is implemented hardware-based. Compared with cloud-hardware security modules which are implemented in the cloud, for a trust module in the cloud backend, it is not required to administer and configure specific keys at the trust module because the trust module preferably generates it keys "on the fly". Advantageously, at applications which are executed within the cloud, a secured, reliably and simplified protection can be realized by using stateless trust modules.

According to a fourth aspect, a field device or an edge device is proposed. The device comprises a programmable hardware unit comprising at least a trust module, in particular according to the above-described trust module for generating a cryptographic key, and
a processing device comprising at least an application, wherein the field device is configured to establish a secure data communication for the application based on a cryptographic key obtained by a cryptographic key request from the trust module.

Preferably, the trust module is implemented in a field device, in particular in the programmable hardware unit of the field device. The programmable hardware unit may be a FPGA.

The field device may comprise a System-on-a-chip (Soc). The field device may be a device, an Internet-of-Things-device, an edge device, a cloud edge device or a device which is arranged within an automation system or an embedded system and which comprises one or more SoCs on which the trust module is implemented.

The embodiments and features described with reference to the method of the present invention apply mutatis mutandis to the trust module and field device of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a flow chart illustrating steps of a method for establishing a secure data communication for a processing device according to an embodiment;
- Fig. 2: shows a block diagram of a trust module for generating a cryptographic key according to an embodiment; and
- Fig. 3: shows a block diagram of a field device according to a first embodiment comprising the trust module according to Fig. 2 and a processing device.

In the Figures, like reference numerals designate like or functionally equivalent elements, unless otherwise indicated.

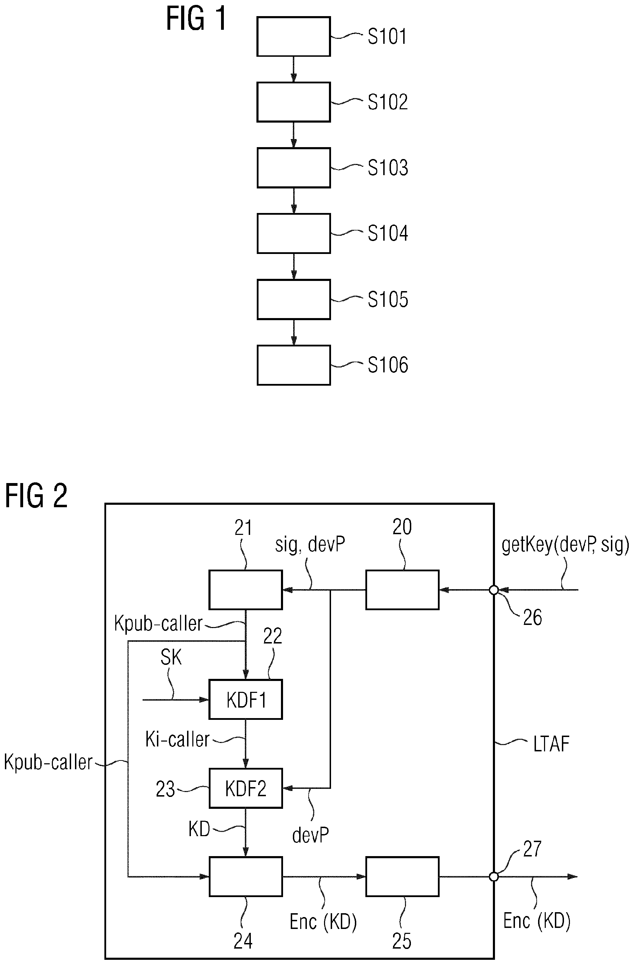

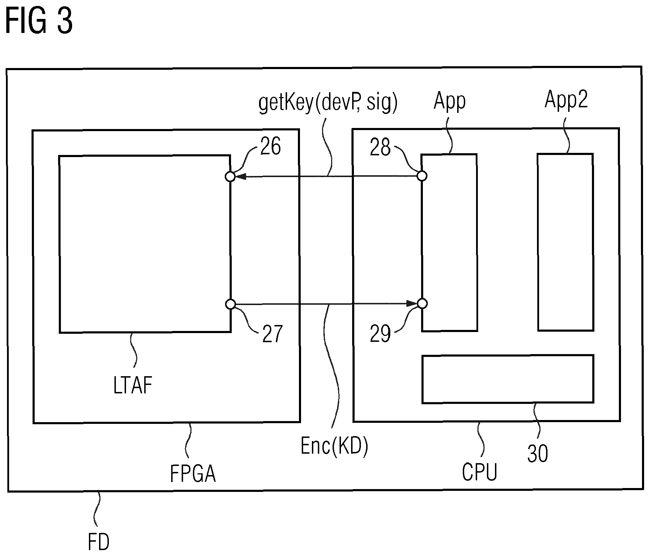

Next, by referring to Figs. 1, 2, and 3, the operation of a trust module LTAF is described. This includes a control process as illustrated in Fig. 1 and a field device FD shown in Fig. 3 in which in a first embodiment the LTAF is executed.

In Fig. 3, a block diagram of a field device FD according to a first embodiment is shown. The field device FD comprises a processing device CPU comprising an application App, a second application App2 and an operating system 30. Further, the field device FD includes a programmable hardware unit FPGA which comprises a stateless trust module LTAF. The field device FD in Fig. 3 is implemented as a System-on-a-chip (SoC) .

A cryptographic request getKey is transmitted from the output 28 of the application App to the input 26 of the trust module LTAF if the application App wants to receive a cryptographic key KD from the trust module LTAF. The trust module LTAF is configured to generate the cryptographic key KD in response to the cryptographic request getKey for the application App. The second application App2 is also configured to transmit a cryptographic request getKey to the trust module LTAF. Further, for operating the processing device CPU and the applications App, App2, an operating system 30 is integrated on the processing device 30.

The generated cryptographic key KD is encrypted in order to generate an encrypted cryptographic key Enc(KD). The encrypted cryptographic key Enc(KD) is transmitted from an output 27 of the trust module LTAF to an input 29 of the application App. Then, the application App is configured to decrypt the encrypted cryptographic key Enc(KD). In addition, the application App is configured to establish a secure data communication between the processing device CPU and another device based on the cryptographic key KD received from the trust module LTAF.

Fig. 1 shows a flow chart illustrating steps of a method for establishing a secure data communication for a processing device CPU based on a cryptographic key KD.

Further, the trust module LTAF in Fig. 2 comprises the following parts: an input unit 20, a verification unit 21, a first key generation unit 22, a second key generation unit 23, an encryption unit 24, and an output unit 25. The elements cooperatively execute the steps shown in Fig. 1, i.e., steps S101 to S106.

In Fig. 2, the input unit 20 of the trust module LTAF is configured to receive at its input 26 a cryptographic key request getKey from a processing device CPU, wherein the cryptographic key request getKey includes an key identifier devP of the processing device CPU and is protected by a digital signature sig of the processing device CPU.

Referring to Fig. 1, in the first step S101, the cryptographic key request getKey is submitted to the trust module LTAF, in particular to the input 26 of the input unit 20 (see Fig. 2) of the trust module LTAF. In another embodiment, the cryptographic key request getKey is submitted from the processing device CPU to the trust module LTAF via an authenticated communication channel.

Further, in Fig. 2, the verification unit 21 is configured to verify the digital signature sig based on a public key Kpub-caller assigned to the processing device CPU. In this embodiment, the public key Kpub-caller is submitted to the trust module LTAF within the cryptographic key request getKey. In another embodiment, the public key Kpub-caller is submitted to the trust module LTAF as a part of the digital signature sig or as a raw key or by referencing the public key Kpub-caller. Next, the public key Kpub-caller is forwarded to the first key generation unit 22 (see Fig. 2).

Hence, according to step S102, the digital signature sig is verified based on the public key Kpub-caller.

Moreover, in step S103 in Fig. 1, an internal cryptographic key Ki-caller is generated by the first key generation unit 22 (see Fig. 2) based on the public key Kpub-caller assigned to the processing device CPU and a secret key SK assigned to the trust module LTAF.

In this embodiment, the first key generation unit 22 of Fig. 2 is configured to generate the internal cryptographic key Ki-caller using a first key derivation function KDF1. The first key derivation function KDF1 maps the public key Kpub-caller and the secret key SK to the internal cryptographic key Ki-caller. In another embodiment, the internal cryptographic key Ki-caller is generated using a key generation function at which a public-private key pair is generated based on a primary seed. The generated internal cryptographic key Ki-caller is then forwarded to the second key generation unit 23 shown in Fig. 2.

In this embodiment, the generated internal cryptographic key Ki-caller is stored in non-volatile storage unit. The generated internal cryptographic key Ki-caller may also be stored in a volatile storage unit.

In Fig. 1, in step S104, the cryptographic key KD is generated by the second key generation unit 23 (see Fig. 2) based on the internal cryptographic key Ki-caller and the key identifier devP provided by the processing device CPU. In this embodiment, the second key generation unit 23 of Fig. 2 is configured to generate the cryptographic key KD using the second key derivation function KDF2. The second key derivation function KDF2 maps the internal cryptographic key Ki-caller and the key identifier devP provided by the processing device CPU to the cryptographic key KD. Next, the generated cryptographic key KD is transmitted to the encryption unit 24 which is shown in Fig. 2.

Further, in step S105 of Fig. 1, the cryptographic key KD is encrypted by the encryption unit 24 (see Fig. 2) using the public key Kpub-caller assigned to the processing device CPU and is then forwarded to the output unit 25 of Fig. 2.

The output unit 25 of Fig. 2 is configured to transmit the encrypted cryptographic key Enc(KD) to the processing device CPU, in particular from the output 27 of the trust module LTAF to the input 29 (see Fig. 3) of the application App which is integrated within the processing unit CPU (see Fig. 3). This corresponds to step S106 in Fig. 1.

In this embodiment, in a further step, the encrypted cryptographic key Enc(KD) is decrypted using a secret key Kpriv-caller assigned to the processing device CPU.

As a result, a secure data communication between the processing device CPU and another device using the cryptographic key KD obtained and generated from the trust module LTAF is established.

In another embodiment which is not shown, a data structure is decrypted by the secret key SK which is assigned to the trust module LTAF. The data structure is transmitted as a part of the cryptographic key request getKey from the processing device CPU to the trust module LTAF in order to obtain a decrypted key out of the data structure. The decrypted key is used for a cryptographic operation of the trust module LTAF.

The trust module LTAF in Fig. 2 is implemented as a stateless Lambda trust anchor. The trust module LTAF further comprises a control device (not shown) which is implemented to operate the trust module LTAF according to the steps S101 - S106 of Fig.1.

In a further embodiment, the trust module LTAF is implemented in a cloud backend of a Function-as-a-service-Cloud-Infrastructure and is configured to generate a client-specific key in dependence of a requesting client.

In a further embodiment, the trust module LTAF is formed as a crypto controller, a hardware security module implemented on a security chip, within a separated execution environment as a Trusted Execution Environment (TEE) or an Intel Software Guard Extension (SGX).

## Claims

1. Method for establishing a secure data communication for a processing device (CPU) based on a cryptographic key (KD), comprising:
submitting (S101) a cryptographic key request (getKey) to a trust module (LTAF), the cryptographic key request (getKey) including a key identifier (devP) provided by the processing device (CPU)and the cryptographic key request (getKey) being protected by a digital signature (sig) of the processing device (CPU);
at the trust module (LTAF), verifying (S102) the digital signature (sig) based on a public key (Kpub-caller) assigned to the processing device (CPU);
at the trust module (LTAF), generating (S103) an internal cryptographic key (Ki-caller) based on the public key (Kpub-caller) assigned to the processing device (CPU) and a secret key (SK) assigned to the trust module (LTAF);
at the trust module (LTAF), generating (S104) the cryptographic key (KD) based on the internal cryptographic key (Ki-caller) and the key identifier (devP) provided by the processing device (CPU);
at the trust module (LTAF), encrypting (S105) the cryptographic key (KD) using the public key (Kpub-caller) assigned to the processing device (CPU); and
transmitting (S106) the encrypted cryptographic key (Enc (KD)) to the processing device (CPU);
wherein the trust module (LTAF) is implemented as a stateless Lambda trust anchor.

2. Method of claim 1, further comprising:
at the processing device (CPU), decrypting the encrypted cryptographic key (Enc (KD)) using a secret key (Kpriv-caller) assigned to the processing device (CPU); and
establishing a secure data communication between the processing device (CPU) and another device using the cryptographic key (KD).

3. The method of claim 1 or 2,
wherein the public key (Kpub-caller) assigned to the processing device (CPU) is submitted to the trust module (LTAF) as a part of the digital signature (sig) or as a raw key or by referencing the public key (Kpub-caller).

4. The method according to any one of claims 1 - 3, further comprising:
generating (S103) the internal cryptographic key (Ki-caller) using a first key derivation function (KDF1), wherein the first key derivation function (KDF1) maps the public key (Kpub-caller) assigned to the processing device (CPU) and the secret key (SK) assigned to the trust module (LTAF) to the internal cryptographic key (Ki-caller).

5. The method according to any one of claims 1 - 3, further comprising:
generating (S103), the internal cryptographic key (Ki-caller) using a key generation function at which a public-private key pair is generated based on a primary seed.

6. The method according to any one of claims 1 - 5, further comprising:
generating (S104) the cryptographic key (KD) using a second key derivation function (KDF2), wherein the second key derivation function (KDF2) maps the internal cryptographic key (Ki-caller) and the key identifier (devP) of the processing device (CPU) to the cryptographic key (KD).

7. The method according to any one of claims 1 - 6, further comprising:
decrypting, by the secret key (SK) which is assigned to the trust module (LTAF), a data structure which is transmitted as a part of the cryptographic key request (getKey) from the processing device (CPU) to the trust module (LTAF) in order to obtain a decrypted key out of the data structure, wherein the decrypted key is used for a cryptographic operation of the trust module (LTAF).

8. The method according to any one of claims 1 - 7, further comprising:
submitting (S101), the cryptographic key request (getKey) from the processing device (CPU) to the trust module (LTAF) via an authenticated communication channel.

9. The method according to any one of claims 1 - 8, further comprising:
storing, the generated internal cryptographic key (Ki-caller), in a volatile storage unit.

10. The method according to any one of claims 1 - 8, further comprising:
storing, the generated internal cryptographic key (Ki-caller), in a non-volatile storage unit.

11. The method according to any one of claims 1 - 10, wherein the trust module (LTAF) is formed as a crypto controller, a hardware security module implemented on a security chip, within a separated execution environment as a Trusted Execution Environment (TEE) or an Intel Software Guard Extension (SGX).

12. A computer program product comprising a program code for executing the method of any of claims 1 - 11 when run on at least one computer.

13. A trust module (LTAF) for generating a cryptographic key (KD) for establishing a secure data communication with a processing device (CPU), comprising:
an input unit (20) configured to receive a cryptographic key request (getKey) from the processing device (CPU), wherein the cryptographic key request (getKey) includes a key identifier (devP) provided by the processing device (CPU), and wherein the cryptographic key request (getKey) is protected by a digital signature (sig) of the processing device (CPU);
a verification unit (21) configured to verify the digital signature (sig) based on a public key (Kpub-caller) assigned to the processing device (CPU);
a first key generation unit (22) configured to generate an internal cryptographic key (Ki-caller) based on the public key (Kpub-caller) assigned to the processing device (CPU) and a secret key (SK) assigned to the trust module (LTAF);
a second key generation unit (23) configured to generate the cryptographic key (KD) based on the internal cryptographic key (Ki-caller) and the key identifier (devP) provided by the processing device (CPU);
an encryption unit (24) configured to encrypt the cryptographic key (KD) using the public key (Kpub-caller) assigned to the processing device (CPU); and
an output unit (25) configured to transmit the encrypted cryptographic key (Enc (KD)) to the processing device (CPU);
wherein the trust module (LTAF) is implemented as a stateless Lambda trust anchor.

14. The trust module (LTAF) of claim 13,
further comprising a control device implemented to operate the trust module (LTAF) according to a method of any one of claims 1 - 12.

15. The trust module (LTAF) of claim 13 or 14,
wherein the trust module (LTAF) is implemented in a cloud backend of a Function-as-a-service-Cloud-Infrastructure and is configured to generate a client-specific key in dependence of a requesting client.

16. A field device (FD) comprising a programmable hardware unit (FPGA) comprising at least a trust module (LTAF), in particular according to any one of claims 13 - 15, and a processing device (CPU) comprising at least an application (App), wherein the field device (FD) is configured to establish a secure data communication for the application (App) based on a cryptographic key (KD) obtained by a cryptographic key request (getKey) from the trust module (LTAF).
